# EUROPEAN PATENT SPECIFICATION

(11) **EP 0 360 112 B1**
(45) Date of publication and mention of the grant of the patent: **17.11.1994**
(21) Application number: 89116730.6
(22) Date of filing: 09.09.1989
(51) Int. Cl.: C08L 69/00

(54) **An article molded from a polycarbonate composition having improved platability**
Formkörper aus einer Polycarbonatzusammensetzung mit verbesserter Plattierbarkeit
Article moulé à partir d'une composition de polycarbonate ayant une aptitude au plaquage

(30) Priority: 22.09.1988 US 247975
(43) Date of publication of application: 28.03.1990
(73) Proprietor: MILES INC., Pittsburgh, PA 15219-2502 (US)
(72) Inventor: Krishnan, Sivaram, Pittsburgh, PA 15241 (US); Price, Ronald L., Weirton West - Virginia 26062 (US); Shu, Peter H. C., Upper St. Clair, PA 15241 (US); Witman, Mark W., Naperville, IL 60540 (US)
(74) Representative: Gremm, Joachim, Dr.

(56) References cited:
- EP-A- 0 063 769
- EP-A- 0 183 167
- FR-A- 2 027 953
- GB-A- 1 274 217
- GB-A- 2 143 242
- GB-A- 2 196 341
- PATENT ABSTRACTS OF JAPAN, vol. 5, no. 62 (C-52)[734], 25th April 1981;& JP-A-56 14 549
- PATENT ABSTRACTS OF JAPAN, vol. 10, no. 98 (C-339), 15th April 1986;& JP-A-60 230 985
- CHEMICAL ABSTRACTS, vol. 79, no. 20, 19th November 1973, page 19, abstract no.116138m, Columbus, Ohio, US; & JP-A-73 55 237
- WPIL / DERWENT, accession no. 83-848378 [51], Derwent Publications Ltd, London,GB; & JP-A-58 196 238

## Description

### Field of the Invention

The invention is directed to articles molded from polycarbonate molding compositions and more particularly to molded articles having a metal coating deposited thereon by an electroless plating process.

### Summary of the Invention

A molding composition comprising a polycarbonate resin and plating modifier was found to be suitable for preparing metal coated articles where the metal coating is deposited by an electroless plating process. The plating modifier in accordance with the invention is a polyanhydride. An advantageous embodiment of the invention includes incorporating in the molding composition a flame retarding amount of a conventional flame retarding agent for polycarbonate compositions.

### Background of the Invention

The closest state of the art is EP-A 0 183 167 which is concerned with shaped products (100x100x3mm, p. 11, 1. 21) moulded from thermoplastic compositions which consist of 10-90 wt.% of PC, 10-90wt.% of ABS and 0-60. wt.% of SAN (claim 1 and table 3). The moulded articles are coated with a metal (p. 11-12) layer deposited by an electroless plating process.

### DETAILED DESCRIPTION OF THE INVENTION

### The Polycarbonate Resin

The polycarbonate resins useful in the practice of the invention are homopolycarbonates, copolycarbonates and terpolycarbonates or mixtures thereof. The polycarbonates generally have a molecular weight of 10,000-200,000 (weight average molecular weight), preferably 20,000-80,000 and their melt flow rate, per ASTM D-1238 at 300°C, is about 1 to about 60 gm/10 min. They may be prepared, for example, by the known interfacial process from a carbonic acid derivative such as phosgene and dihydroxy compounds by polycondensation (see the monograph H. Schnell, "Chemistry and Physics of Polycarbonates", Interscience Publishers, New York, 1964).

In the present context, dihydroxy compounds suitable for the preparation of the polycarbonates of the invention conform to the structural formulae (1) or (2) 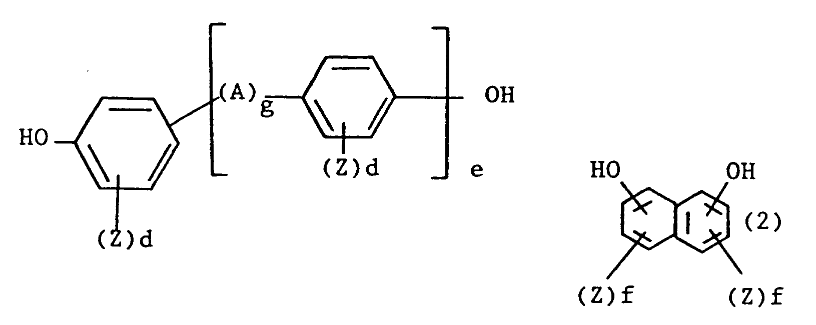
wherein
A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂- or a radical conforming to 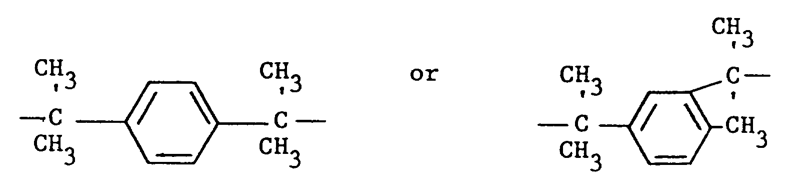
e and g both denote the number 0 to 1;
Z denotes F, Cl, Br or C₁-C₄-alkyl and if several Z radicals are substituents in one aryl radical, they may be identical or different;
d denotes 0 or an integer of from 1 to 4; and
f denotes 0 or an integer of from 1 to 3.

Among the useful bisphenols in the practice of the invention are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones and alpha, alpha'-bis-(hydroxyphenyl)-diisopropyl-benzenes, as well as their nuclear-alkylated compounds. These and further suitable aromatic dihydroxy compounds are described, for example, in U.S. Patents 3,028,356; 2,999,835; 3,148,172; 2,991,273; 3,271,367; and 2,999,846. Further examples of suitable bisphenols are 2,2-bis-(4-hydroxyphenyl)-propane (bisphenol A), 2,4-bis-(4-hydroxyphenyl)-2-methyl-butane, 1,1-bis-(4-hydroxyphenyl)-cyclohexane, alpha, alpha'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)-sulfone, hydroxybenzophenone, 2,4-bis-(3,5-dimethyl-4-hydroxyphenyl)-cyclohexane, alpha, alpha'-bis-(3,5-dimethyl-4-hydroxyphenyl)-cyclohexane, alpha, alpha'-bis-(3,5-dimethyl-4-hydroxyphenyl)-p-diisopropylbenzene and 4,4'-sulfonyl diphenol.

Examples of particularly preferred aromatic bisphenols are 2,2-bis-(4-hydroxyphenyl)-propane, 2,2-bis-(3,5-dimethyl-4-hydroxyphenyl)-propane and 1,1-bis-(4-hydroxyphenyl)-cyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention are included phenolphthalein-based polycarbonate, copolycarbonates and terpolycarbonates such as are described in U.S Patents 3,036,036 and 4,210,741.

The polycarbonates of the invention may also be branched by condensing therein small quantities, e.g., 0.05-2.0 mol % (relative to the bisphenols) of polyhydroxyl compounds. Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)-cyclohexyl]-propane; 2,4-bis-(4-hydroxy-1-isopropylidine)-phenol; 2,6-bis-(2'-dihydroxy-5'-methylbenzyl)-4-methylphenol; 2,4-dihydroxy-benzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxybenzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in U.S. Patents 3,028,365; 2,999,846; 3,153,008; and 2,991,273.

The preferred process for the preparation of polycarbonates is the interfacial polycondensation process.

Other methods of synthesis in forming the polycarbonates of the invention such as disclosed in U.S. Patent 3,912,688, may be used.

Suitable polycarbonate resins are available in commerce, for instance, under the trademark Makrolon from Mobay Corporation, Pittsburgh, PA. Particularly suitable are bisphenol A based homopolycarbonate resins having melt indices per ASTM D-1238 in the ranges of 3.5-60 gm/10 min.

The plating modifier in accordance with the invention is a polyanhydride. In the present context, polyanhydride conforms to 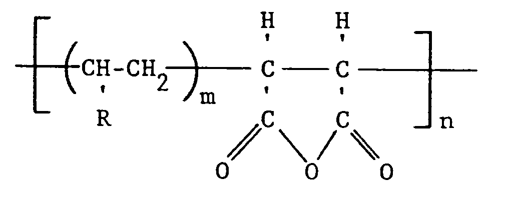
wherein R is a hydrogen atom or a C₁-C₂₈ alkyl, aryl or alkylaryl radical, n is an integer of from 1 to 200 and m is an integer of from 1 to 3.
Preferably R is either a hydrogen atom or a C₁₄-C₁₆ alkyl group.

Preparation of suitable polyanhydrides was disclosed in U.S. Patent 3,586,659. Commercial products suitable in the practice are EMA resins from Monsanto and polyanhydrides from Gulf Oil Chemical Company.

In the practice of the invention, a thermoplastic molding composition is prepared by blending a polycarbonate resin with 0.5 to 5 percent, preferably 0.5 to 2 percent of polyanhydride, said percents being relative to the total weight of the resin and modifier.

The compositions of the invention may further contain auxiliary additives such as flame retarding agents, pigments, stabilizers, release agents, fillers and reinforcing agents all of which are conventional and known in the art.

Flame retardant agents for polycarbonate resins are known in the art. These agents have been widely reported in the patent literature and include halogenated compounds, especially brominated compounds and most particularly aromatic brominated compounds, sulfonate salts of alkali metals or alkaline earth metals and complex ion metal salts, such as sodium aluminum fluoride, and phosphorus compounds. Preferably the flame retarding agents are sulfonate salts and halogenated aromatic compounds.

The invention is illustrated below by the examples in which all parts and percentages are by weight unless otherwise specified.

### EXAMPLES

Compositions within the scope of the invention were prepared and test specimens molded therefrom. The preparation and molding steps followed conventional procedures and used known equipment. In the examples, the resin was a bisphenol A based polycarbonate. A flame retarding agent, potassium perfluorobutane sulfonate at a level of 0.1 percent was included in the compositions. About 1.6% of a pigment and mold release agent having no present criticality were also included.

The molded specimens were coated with a thin layer of copper deposited by an electroless process. The table below summarizes the results of the evaluation of the compositions.

Example 1 (control) contained no plating modifier while Examples 2 and 3 contained respectively 0.5 and 1.0 percent of polyanhydride (EMA® 1103 from Monsanto).

| EXAMPLE | 1 | 2 | 3 |
|---|---|---|---|
| Polycarbonate, % | 98.3 | 98.3 | 97.3 |
| Flame retarding agent, % | 0.10 | 0.10 | 0.10 |
| Plating Modifier, % | - | 0.5 | 1.0 |
| Pigment and Release Agent | 1.6 | 1.6 | 1.6 |
| Melt flow gms/10 min. | 17.9 | 15.8 | 16.5 |

| Flammability rating, | | | |
|---|---|---|---|
| UL-94 (@ 3,1 mm 1/8") as is | V-2 | V-0 | V-0 |
| after 7 days aging | V-0 | V-0 | V-0 |

| Adhesion force (lbs/in) kg/cm | | | |
|---|---|---|---|
| (range) | 0,483-0,895 (2.7-5.0) | 0,447-1,11 (2.5-6.2) | 0,75-1,42 (4.2-7.9) |
| (average) | 0,66 (3.7) | 0,875 (4.9) | 1,0 (5.6) |

Comparison Examples 4 and 5 represent the results of testing compositions containing ABS as the plating modifier (butadiene content of 18%, acrylonitrile 22% and styrene 60%; MW 147,000).

| EXAMPLE | 4 | 5 |
|---|---|---|
| Polycarbonate, % | 98.3 | 97.3 |
| Flame retarding agent, % | 0.10 | 0.10 |
| Plating Modifier, % | 0.50 | 1.00 |
| Pigment and Release Agent | 1.6 | 1.6 |
| Melt flow gms/10 min. | 15.8 | 15.7 |

| Flammability rating, | | |
|---|---|---|
| UL-94 (@1/8") as is | V-0 | V-0 |
| after 7 days aging | V-0 | V-0 |

| Adhesion force (lbs/in) kg/cm | | |
|---|---|---|
| (range) | 0,41-0,875 (2.3-4.9) | 0,43-1,81 (2.4-10.1) |
| (average) | 0,645 (3.6) | 1,42 (7.9) |

In comparison Examples 6 and 7 the plating modifier was a copolymer of styrene and acrylonitrile (28% Acrylonitrile - 72% styrene).

| EXAMPLE | 6 | 7 |
|---|---|---|
| Polycarbonate, % | 98.3 | 97.3 |
| Flame retarding agent, % | 0.10 | 0.10 |
| Plating Modifier, % | 0.50 | 1.00 |
| Pigment and Release Agent | 1.6 | 1.6 |
| Melt flow gms/10 min. | 14.7 | 14.5 |

| Flammability rating, | | |
|---|---|---|
| UL-94 (@1/8") as is | V-0 | V-0 |
| after 7 days aging | V-0 | V-0 |

| Adhesion force (lbs/in) kg/cm | | |
|---|---|---|
| (range) | 0,232-0,68 (1.3-3.8) | 0,41-1,47 (2.3-8.2) |
| (average) | 0,465 (2.6) | 0,93 (5.2) |

In the experiments, a 6" x 6" plate was molded from each of the compositions and a thin layer of Cu/Ni was deposited on each by an electroless plating process. The adhesion of the metallic layer to the substrate was determined by a test in accordance with ASTM B-533.

## Claims

1. An article molded from a thermoplastic molding composition comprising an aromatic polycarbonate resin and as a plating modifier 0.5 to 5 percent of a polyanhydride conforming to 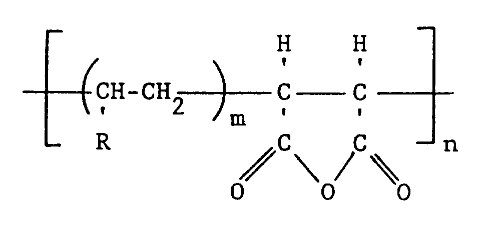 wherein R is hydrogen or a C₁-C₂₈ alkyl, aryl or alkylaryl radical, m is 1 to 3 and n is 1 to 200 , said article being characterized in that it is at least partially coated with a metal layer deposited by an electroless plating process.

2. The article of Claim 1 wherein said R is a hydrogen atom or a C₁₄-C₁₆ alkyl group.

3. The article of Claim 1 comprising a flame retarding amount of a conventional flame retarding agent for polycarbonate compositions.

## Patentansprüche

1. Gegenstand, der aus einer thermoplastischen Formmasse formgepreßt ist, die ein aromatisches Polycarbonat-Harz und, als Metallisierungsregler, 0,5 bis 5 % eines Polyanhydrids entsprechend 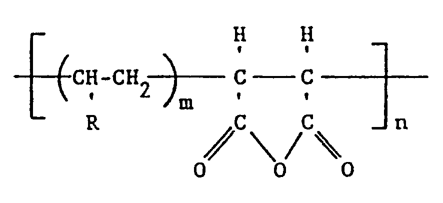 umfaßt, worin
R Wasserstoff oder ein C₁-C₂₈-Alkyl-, Aryl- oder Alkylaryl-Rest ist,
m 1 bis 3 ist und
n 1 bis 200 ist,
wobei der Gegenstand dadurch gekennzeichnet ist, daß er wenigstens partiell mit einer Metall-Schicht beschichtet ist, die mittels eines Verfahrens des stromlosen Plattierens abgeschieden ist.

2. Gegenstand nach Anspruch 1, worin R ein Wasserstoff-Atom oder eine C₁₄-C₁₆-Alkyl-Gruppe ist.

3. Gegenstand nach Anspruch 1, umfassend eine flammenhemmende Menge eines konventionellen Flammschutzmittels für Polycarbonat-Zusammensetzungen.

## Revendications

1. Article moulé à partir d'une composition de moulage thermoplastique comprenant une résine de polycarbonate aromatique et comme agent modifiant de plaquage 0,5 à 5 % d'un polyanhydride conforme à la formule : 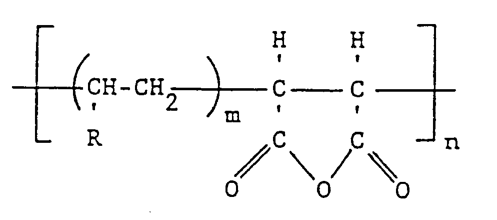 dans laquelle R est l'hydrogène ou un radical alkyle, aryle ou alkylaryle en C₁-C₂₈, m est compris entre 1 et 3 et n est compris entre 1 et 200, ledit article étant caractérisé en ce qu'il est au moins partiellement recouvert d'une couche métallique déposée par un procédé de plaquage non électrolytique.

2. Article selon la revendication 1, dans lequel ledit R est un atome d'hydrogène ou un groupe alkyle en C₁₄-C₁₆.

3. Article selon la revendication 1, comprenant une quantité de retardateur d'inflammation d'un agent retardateur d'inflammation classique pour des compositions de polycarbonate.
